# EUROPEAN PATENT SPECIFICATION

(11) **EP 1 329 127 B1**
(45) Date of publication and mention of the grant of the patent: **02.04.2008**
(21) Application number: 01989037.5
(22) Date of filing: 15.10.2001
(51) Int. Cl.: H04Q 7/38

(54) **METHOD AND APPARATUS FOR SECURING A MOBILE ELECTRONIC DEVICE BASED ON LOCATION**
VERFAHREN UND VORRICHTUNG ZUR SICHERUNG EINES MOBILEN ELEKTRONISCHEN GERÄTS AUF DER GRUNDLAGE DES STANDORTS
PROCEDE ET APPAREIL POUR PROTEGER UN DISPOSITIF ELECTRONIQUE MOBILE, DONT LE FONCTIONNEMENT EST BASE SUR L'EMPLACEMENT DE CE DISPOSITIF

(30) Priority: 27.10.2000 US 698890
(43) Date of publication of application: 23.07.2003
(73) Proprietor: Nokia Corporation, 02150 Espoo (FI)
(72) Inventor: HEIE, Anders, Poway, CA 92064 (US)
(74) Representative: Roman Ekstedt, Måns
(86) International application number: PCT/US2001/032521
(87) International publication number: WO 2002/035880

(56) References cited:
- WO-A-99/21377
- US-A- 6 011 973

## Description

### FIELD OF INVENTION

This invention relates to a method and apparatus for securing an electronic device, more particularly, to a method and apparatus for securing a mobile electronic device based on location.

### BACKGROUND OF THE INVENTION

A number of methods have been developed to address the security of mobile electronics and security of information stored in the device. Some of these methods include the use of hardware systems while others include software systems. Hardware system generally includes laptop locks and motion sensors, which physically secures an electronic device by detecting movement. Software system includes functions having encryption technology, which protect against unauthorized access to the information stored in the electronic device.

Use of the hardware device is generally limited to larger mobile electronic devices such as laptop computers. Also, use of the hardware system requires fixed location or structure to secure the mobile device. Furthermore, hardware systems are inconvenient for smaller devices, especially where a fixed structure is not available, such a mobile device at the beach.

Use of the software system does not provide adequate protection against unauthorized removal of the mobile device from a location. Once removed (stolen) from a location, the thief may freely attempt to access the information at another location without alerting others that the device used by the thief is stolen.

US Patent 6,011,973 discloses a method and apparatus for restricting operation of a cellular phone to delineated geographical areas where the ascertained geographical location is compared with information about allowability of the operation of the cellular phone in various geographical areas. However, the disclosure does not provide a functionality to alert the user when this happens.

WO 99/21377 shows a system and method for restricting on-going calls of a fixed subscriber to a fixed subscription area in a cellular telecommunication system, in which the system detects if the current position of the cellular phone exceeds the subscription area, and drops the call if this happens.

It would be useful if a security lockout system was based on geographical range, which is generated at the time of activation of security lockout system. Furthermore it would be useful to lockout access to the mobile device's content and provide a warning if the mobile device is moved out of the set geographical range.

### SUMMARY OF INVENTION

The present invention advantageously provides an apparatus and an associated method for an electronic device having a security lockout system to facilitate alerting the owner and preventing an unauthorized user from accessing contents of the electronic device when moved from a predetermined geographical range.

The present invention encompasses an electronic device, such as a mobile terminal or a personal digital assistant (PDA) or any other mobile device in a communication system (for example, CDMA, TDMA, GSM, etc.). The mobile terminal (MT) comprises a method of receiving location information (for example x, y, z coordinates or latitude, longitude coordinates) from an external source such as base stations or navigational satellites. The MT also comprises a method of determining the geographical range (also known as geographical boundary) upon activating the security lockout method. The MT further comprises a method of activating an alarm and locking out the MTs features if the MT is moved out of the predetermined geographical boundary.

Once the user activates the security lockout system, the security lockout system remains active until the user enters a valid password to deactivate the system. An advantage of the invention is that all access to the electronic device's content is locked out if the electronic device is moved from the secured location.

A more complete appreciation of all the advantages and scope of the present invention can be obtained from the accompanying drawings, the following detailed description of the invention, and the appended claims.

### BRIEF DESCRIPTION OF THE DRAWINGS

FIG. 1 illustrates a block diagram of a mobile station into which an embodiment of the invention may be implemented;
FIG. 2 shows a security lockout monitor task software module depiction of an embodiment of the invention;
FIG. 3 shows a security lockout events task software module depiction of an embodiment of the invention; and
FIG. 4 shows a security lockout task software module depiction of an embodiment of the invention.

### DETAIL DESCRIPTION OF THE INVENTION

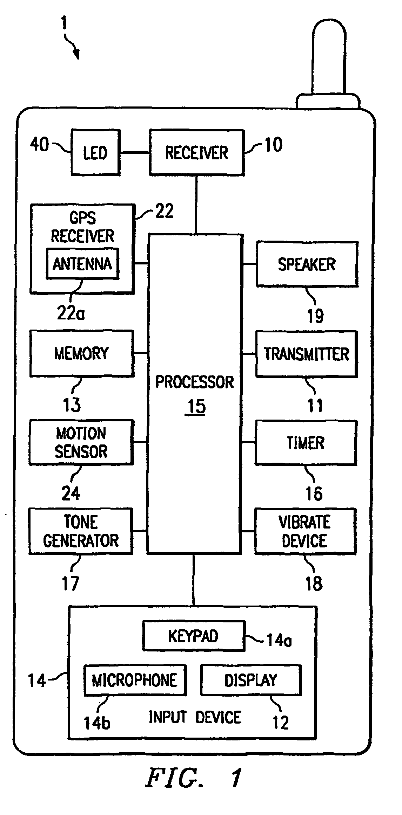

FIG. 1 is a block diagram of the mobile station 1, according to an embodiment of the invention. Generally, mobile station 1 includes receiver 10, transmitter 11, and controller (which may also be known as a processor) 15 that is coupled to transmitter 11 and receiver 10. Processor 15, coupled the transmitter 11 and the receiver 10, initiates the transmission of outgoing signals and processes incoming signals, respectively. These signals may include signaling information in accordance with the air interface of the applicable cellular or digital system and also user speech and/or user generated data. The incoming signals may also include location information of one or more base stations which are within the vicinity (or in communication) of the mobile terminal 1. The location information may be received as x, y, z spatial coordinates.

In the preferred embodiment, the mobile terminal 1 comprises a Global Positioning System (GPS) receiver 22 for receiving GPS signals from one or more navigational satellites. The GPS receiver 22, is coupled to the processor 15, the processor 15 for processing GPS signals to calculate the location of the mobile terminal 1. The GPS signals are transmitted to the surface by orbiting GPS satellites (preferably three or more), that are picked up by a GPS antenna 22a of the GPS receiver 22. The GPS receiver 22 converts the GPS signals received from the GPS orbiting satellites into the spatial coordinates of the current receiver location. The spatial coordinates may be defined by the four coordinates x, y, z and t, with x, y, z being the three dimensional spatial point and t being the time at which the x, y, z spatial reference occurs. By simple geometry, for example triangulation, the location of the mobile terminal having a GPS receiver 22 can be calculated. The use of triangulation to determine position is well known and one of ordinary skill in the art will recognize that use of GPS signals will produce a very accurate fix on the GPS receiver's 22 location. Using the spatial coordinates determined from base stations or GPS satellites and using well-known triangulation techniques the processor is able to generate the location (or position) of the mobile terminal 1.

A user interface includes a Liquid Crystal Display (LCD) 12, which may comprise a touch-screen display, Light Emitting Diode (LED) 40, tone generator 17, speaker 19, vibrating device 18 and user input device 14, comprising alpha-numeric keypad 14a, all of which are coupled to processor 15. The input device may also comprise microphone 14b for generating input. Mobile station 1 also comprises timer 16 (also referred to as a clock chip) coupled to processor 15 for synchronizing the operations of processor 15 and tracking time. Mobile station 1 further comprises a motion sensor 24 for detecting motion of the mobile station 1.

Mobile station 1 also includes various memories, shown collectively as memory 13. Memory 13 includes a plurality of stored constants and variables that are used by processor 15 during the operation of mobile station 1. For example, memory 13 stores the values of the various feature parameters and the Number Assignment Module (NAM). The memory 13 is also used to store the location information of the mobile terminal 1 and the geographical range (or geographical boundaries). An operating program for controlling the operation of processor 15 is also stored in memory 13 (typically in a read only memory). Memory 13 is also used to store data provided by the user through the user interface. Furthermore, memory 13 is used to hold the subprograms or sub-processes for controlling the operation of mobile station 1 and carrying out the embodiment of the invention. The operating program in memory 13 includes routines for setting up, monitoring and executing a security lockout system.

In an exemplary implementation of an electronic device, analogous to the mobile station 1, a security lockout system is provided for locking out features of an electronic device. The system is executed when at least one predetermined events, discussed below, occurs while the security lockout system of electronic device is set to monitor for an predetermined event. During the setting up of the security lockout system, the current location is calculated. In an exemplary implementation the electronic device, having a GPS receiver 22 coupled to the processor 15, calculates the current location in latitude and longitude. Upon calculating the current location, a geographical range is determined by using the current location and a range value. For example, the current location may be represented in latitude (X) and longitude (Y), then the geographical range, using a range value (R) may be (X-R, Y) to (X+R, Y) and (X, Y-R) to (X, Y+R). These ranges may be predetermined or entered by the user.

Once the security lockout system is set, the electronic device monitors for one or more of predetermined security lockout events. If at least one of the security lockout events occur then the security lockout system begins by determining the current location of the electronic device. If the electronic device is out of the geographical range, then one or more predetermined security lockout features may be activated. For example, an alarm is activated and/or the electronic device's features are locked out wherein a valid password is required to unlock the features. The alarm may comprise a warning light, a warning buzzer, or an audible and/or visual warning, all of which are intended to warn others that the electronic device is moved out of permitted location or area. The statuses of all the security lockout features remain active even if the power of the electronic device is lost or manually turned off. The statuses of security lockout features are re-checked and if it is determined that alarm was previously active, then the alarm is re-activated. For example, even if a thief turns off the power or removes the battery of the electronic device when the alarm is activated, then, the alarm will re-activate when thief returns power to the electronic device.

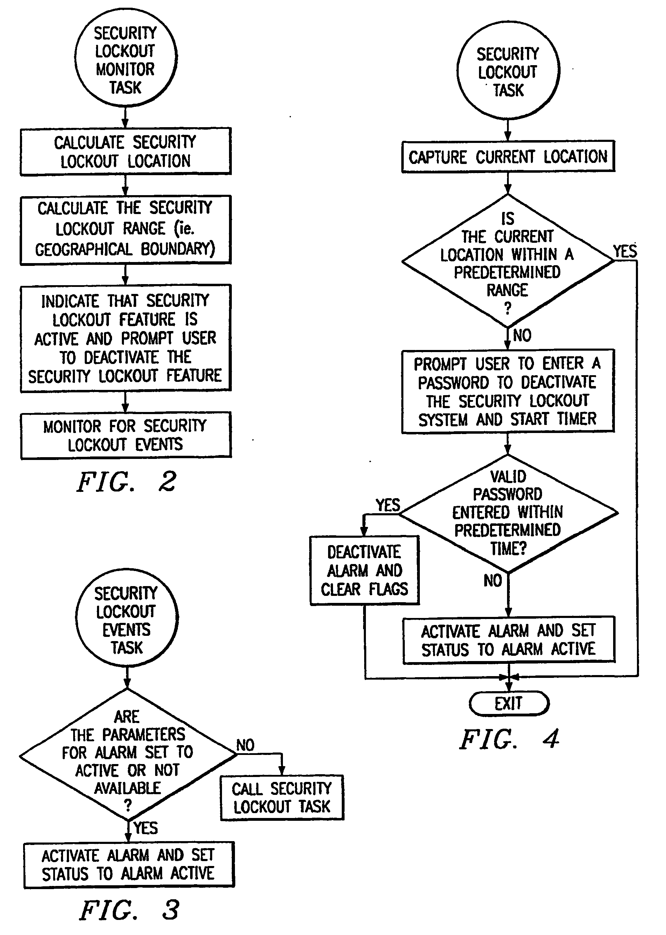

FIG. 2 illustrates a Security Lockout Monitoring Task, shown generally at 200, of an embodiment of the present invention in which mobile station is placed in a monitor mode. The method is operable to set the security lockout system of the mobile station 1. The Security Lockout Monitoring Task 200 is initiated when the user initiates the activation of the Security Lockout system by using the menu functions of the mobile station or by actuating a predefined key of the mobile station 1. At block 202, the processor 15 determines the Security Lockout location of the mobile station 1. The Security Lockout location is determined by capturing the current location of the mobile station 1 using the location determining techniques described above. In the preferred embodiment, well known GPS location determining techniques are used to calculate the most accurate current location. The location may be represented in latitude and longitude coordinates. Note that other location determining methods, such as network aided methods, may be used without departing from the invention.

At block 204, the processor determines a Security Lockout range (or geographical boundary). In a preferred embodiment, a range value (R) may be predetermined, for example 5 feet, at the time of manufacture. Then, the range value is used in conjunction with the Security Lockout location, thereby creating a geographical boundary based on Security Lockout location of the mobile station 1. In the preferred embodiment, the geographical boundary coordinates are resented in (X,Y) wherein (X,Y) represent the Security Lockout location. The shape of geographical boundary may be a square or a circle shaped boundary. A square shaped geographical boundary, wherein R=5, would be a 10 feet by 10 feet area with (X, Y) as the center. A circle shaped geographical boundary, wherein R=5, would be a circle having a 10 feet of diameter. These geographical boundary coordinates (X, Y) and R are stored in memory 13 for later use. It should be noted that the user might be allowed to manually modify the range value and shape, thereby increasing or decreasing the geographical boundary. At block 206, a message is displayed on the display 12 to indicate that the security lockout feature is active and the user is prompted to enter a password to deactivate the feature. At this stage, the security lockout system is activated and the status of mobile station is set to security lockout system active and the processor 15 begins monitoring for one or more events from a list of Security Lockout events (discussed below), at block 208. Once, the security lockout system is activated, the status of the mobile stations remain active until deactivated by an authorized user.

The types of events defined in a list of Security Lockout events may be predetermined at the time of manufacture or setup by the user of the mobile station 1. In a preferred embodiment, the Security Lockout events for mobile station 1 comprises a motion event, a power on event and a functional key actuated event. The processor 15 generates these events, only if the security lockout system is activated. The processor may determine if the security lockout system of the mobile station 1 is activated, by checking the status of the mobile station 1. The processor generates the motion event when the motion sensor of the mobile station 1 is activated. The power on event is generated when the mobile station 1 is turned on and the security lockout system was active before the previous powering off of the mobile station 1. By checking the status of the mobile station 1, the processor determines if the security lockout system was previously activated. The functional key actuated event is generated upon actuation of any one of functional keys of keypad 14a of the mobile station 1. For example, the functional keys comprise 0-9, *, # and arrow keys on the keypad 14a. The functional key actuated event usually occurs when the user is attempting to access the features of the mobile station 1.

FIG. 3 describes a Security Lockout Events task 300 accordance to an embodiment of the invention for determining which actions to execute based on the security lockout events. This task is initiated when any one of the security lockout events described above is generated. At block 302, the status mobile station 1 is determined. If determined, at block 302 that the status of the mobile station 1 is alarm active or the parameters are not available, then at block 304, the activation of alarm is continued until a valid password is entered. Generally, the parameters are not available if the unauthorized user removes the memory of the device to avoid the activation of the alarm. Otherwise, at block 306, the processor executes the Security Lockout task described below.

FIG. 4 describes a method of a Security Lockout task 400 in accordance to an embodiment of the invention for activating the security lockout feature of the mobile station 1. The Security Lockout task 400 is executed when at least one of the Security Lockout events occurs. At block 402, the current location of the mobile station 1 is captured. At block 404, the current location is compared to the predetermined Security Lockout range. In the preferred embodiment, (X', Y') represent the current location, (X, Y) represent the Security Lockout location (described above) and R represent the range value. For the geographical boundary that-is set to a square shaped boundary, the processor determines the current location (X', Y') to be within a square shaped boundary if ((X-R <= X' <= X+R) and (Y-R <= Y' <= Y+R)). For the geographical boundary that is set to a circle shaped boundary, the processor determines the current location to be within the circle shaped boundary if the distance between the current location and the Security lockout location is less than or equal to R. Using well known mathematical equations, the processor determines the current location (X', Y') to be within a circle shaped boundary if sqroot((X' - X)**2 + (Y' - Y)**2) <= R. Regardless of the shape of the geographical boundary, if the mobile station 1 is within the Security Lockout range, then exit the Security Lockout task, at 414. Otherwise, at block 406, the processor 15 locks out all or predetermined features of the mobile station 1 and prompts the user to enter a valid password. Also, a timer is started (30 seconds for example) and is displayed on the display 12. The user, which may be a thief, is allowed a predetermined time to enter a valid password to deactivate the Security Lockout System. At block 408, determination is made to check if a valid password was entered within the predetermined time. If determined, at block 308, that a valid password was entered within allotted time, then at block 410 the Security Lockout system is deactivated. Otherwise, at block 412, an alarm function is activated. Depending on the mobile station's 1 settings, the alarm function may comprise the processor 15 flashing the LED 40, providing loud beeps using the speaker 19, generating loud tones using the tone generator 17 of the mobile station 1 or automatically dialing a stored number (for example, a police dispatch). Also, the processor sets mobile station 1 status to alarm active and the status of the mobile station 1 remains alarm active until a valid password is entered.

As examples, the method and apparatus may also be implemented in electronic devices such as PDA, GPS devices, portable computers, and other devices having a wireless connection system and location receiving methods. The method and apparatus may be realized by implementing an operating mode, which may be modified by the user using a menu feature.

Thus, while the invention has been particularly shown and described with respect to preferred embodiments thereof, the above description is intended by way of example only and is not intended to limit the present invention in any way except as set forth in the following claims.

## Claims

1. A method of securing a mobile electronic device having a security lockout system, against unauthorized removal and usage outside a pre-calculated geographical boundary, the method comprising the steps of :
activating the security lockout system upon receiving input from a user;
detecting a security lockout event;
calculating a current location of the mobile electronic device;
determining if the mobile electronic device is within the geographical boundary; and
activating an alarm function if it is determined that said current location of the mobile electronic device is not within the geographical boundary.

2. The method as claimed in claim 1, wherein the step of activating the security lockout system further comprises the steps of calculating said geographical boundary; and storing said geographical boundary in a memory of said mobile electronic device.

3. The method as claimed in claim 1 or 2, comprising the step of prompting the user to enter a valid password within a predetermined time prior to the step of activating said alarm function.

4. The method as claimed in claim 1, wherein said security lockout event comprises a power on event, where said power on event is generated upon powering on the mobile electronic device.

5. The method as claimed in claim 1, wherein said security lockout event comprises a motion event, where said motion event is generated upon detecting motion of the mobile electronic device.

6. The method as claimed in claim 1, wherein said security lockout event comprises a functional key actuated event, where said functional key actuated event is generated upon actuation of one or more functional keys of the mobile electronic device.

7. The method as claimed in claim 1, further comprising the step of prompting the user to enter a valid password within a predetermined time, prior to the step of activating said alarm function.

8. The method as claimed in claim 7, further comprising the step of deactivating said alarm function if a valid password is provided within said predetermine time.

9. The method as claimed in claim 1, wherein said alarm function comprises the step of generating loud beeps using a speaker.

10. The method as claimed in claim 1, wherein said alarm function comprises the step of generating loud tones using a tone generator.

11. The method as claimed in claim 1, wherein said alarm function comprises the step of flashing an LED.

12. The method as claimed in claim 1, the step of calculating current location comprises the step of receiving location information from one or more GPS satellites.

13. The method as claimed in claim 1, the step of calculating current location comprises the step of receiving location information from one or more base stations.

14. A mobile electronic device having a security lockout system to secure against unauthorized removal and use, the mobile electronic device (1) comprising:
a receiver (10, 22) for receiving location information;
a memory (13) having geographical boundary coordinates stored;
a processor (15) coupled to said receiver, said processor (15) for calculating a current location of the mobile electronic device (1);
said processor coupled to said memory, said processor further determining if said current
location of the mobile electronic device (1) is within said geographical boundary;
**characterized by**:
said processor (15) further adapted to
- determine if a security lockout event occurred, prior to calculating said current location of the electronic device,
- activate the security lockout system upon receiving input from the user, prior to a generation of said security lockout event, and
- activate an alarm function if determined that said current location of the electronic device is not within said geographical boundary.

15. The mobile electronic device as claimed in claim 14, wherein said processor (15) further calculates said geographical boundary coordinates and storing said geographical boundary coordinates in said memory when activating the security lockout system.

16. The mobile electronic device as claimed in claim 14, wherein,
said security lockout event comprises a power on event; and
said processor (15) generates said power on event upon the user powering on the mobile electronic device (1).

17. The mobile electronic device (1) as claimed in claim 14, wherein,
said security lockout event comprises a motion event; and
said processor (15) further is coupled to a motion sensor (24) for generating said motion event upon detecting motion of the mobile electronic device.

18. The mobile electronic device as claimed in claim 14, wherein,
said security lockout event comprises a functional key actuated event; and
said processor (15) further is coupled to one or more functional keys (14) for generating said functional key actuated event upon the user actuating at least one said plurality of functional keys.

19. The mobile electronic device as claimed in claim 14, wherein said processor (15) prompts the user to enter a valid password within a predetermined time, prior to activating said alarm function.

20. The mobile electronic device as claimed in claim 19, wherein said processor (15) determines if a valid password was entered within said predetermined time and deactivates the alarm function if determined that said valid password was entered within predetermined time.

21. The mobile electronic device as claimed in claim 14, wherein said alarm function comprises said processor (15) generating loud tones using a tone generator (17).

22. The mobile electronic device as claimed in claim 14, wherein said alarm function comprises said processor (15) flashing an LED (40).

23. The mobile electronic device as claimed in claim 14, wherein said alarm function comprises processor (15) generating loud beeps using a speaker (19).

24. The mobile electronic device as claimed in claim 14, wherein said receiver (10) receives said location information from one or more GPS satellites.

25. The mobile electronic device as claimed in claim 14, wherein said receiver (10) receives location information from one or more base stations.

## Patentansprüche

1. Verfahren zur Sicherung einer mobilen elektronischen Vorrichtung mit einem Sicherheitsverriegelungssystem gegen unbefugtes Entfernen und Verwendung außerhalb einer vorher berechneten geographischen Umgrenzung, wobei das Verfahren die Schritte umfasst:
- Aktivieren des Sicherheitsverriegelungssystems auf das Empfangen einer Eingabe von einem Benutzer hin;
- Erfassen eines Sicherheitsverriegelungsereignisses;
- Berechnen eines aktuellen Standorts der mobilen elektronischen Vorrichtung;
- Bestimmen, ob die mobile elektronische Vorrichtung sich innerhalb der geographischen Umgrenzung befindet; und
- Aktivieren einer Alarmfunktion, falls bestimmt wird, dass der aktuelle Standort der mobilen elektronischen Vorrichtung sich nicht innerhalb der geographischen Umgrenzung befindet.

2. Verfahren nach Anspruch 1, wobei der Schritt des Aktivierens des Sicherheitsverriegelungssystems weiter die Schritte des
- Berechnens der geographischen Umgrenzung; und
- Speichern der geographischen Umgrenzung in einem Speicher der mobilen elektronischen Vorrichtung umfasst.

3. Verfahren nach Anspruch 1 oder 2, umfassend den Schritt eines Aufforderns des Benutzers vor dem Schritt des Aktivierens der Alarmfunktion innerhalb einer vorgegeben Zeit ein gültiges Passwort einzugeben.

4. Verfahren nach Anspruch 1, wobei das Sicherheitsverriegelungsereignis ein Anschaltereignis umfasst, wobei das Anschaltereignis auf ein Anschalten der mobilen elektronischen Vorrichtung hin erzeugt wird.

5. Verfahren nach Anspruch 1, wobei das Sicherheitsverriegelungsereignis ein Bewegungsereignis umfasst, wobei das Bewegungsereignis auf Erfassen einer Bewegung der mobilen elektronischen Vorrichtung hin erzeugt wird.

6. Verfahren nach Anspruch 1, wobei das Sicherheitsverriegelungsereignis ein Funktionstasten-Betätigungs-Ereignis umfasst, wobei das Funktionstasten-Betätigungs-Ereignis auf eine Betätigung von einer oder mehreren Funktionstasten der mobilen elektronischen Vorrichtung hin erzeugt wird.

7. Verfahren nach Anspruch 1, weiter umfassend den Schritt des Aufforderns des Benutzers vor dem Schritt des Aktivierens der Alarmfunktion innerhalb einer vorgegeben Zeit ein gültiges Passwort einzugeben.

8. Verfahren nach Anspruch 7, weiter umfassend den Schritt des Deaktivierens der Alarmfunktion, falls innerhalb einer vorgegeben Zeit ein gültiges Passwort bereitgestellt wird.

9. Verfahren nach Anspruch 1, wobei die Alarmfunktion den Schritt einer Erzeugung von lauten Pieptönen mit einem Lautsprechen umfasst.

10. Verfahren nach Anspruch 1, wobei die Alarmfunktion den Schritt einer Erzeugung von lauten Tönen mit einem Tonerzeuger umfasst.

11. Verfahren nach Anspruch 1, wobei die Alarmfunktion den Schritt umfasst, eine LED aufleuchten zu lassen.

12. Verfahren nach Anspruch 1, wobei der Schritt des Berechnens des aktuellen Standorts den Schritt eines Empfangens einer Standortinformation von einem oder mehreren GPS-Satelliten umfasst.

13. Verfahren nach Anspruch 1, wobei der Schritt des Berechnens des aktuellen Standorts den Schritt eines Empfangens einer Standortinformation von einem oder mehreren Basisstationen umfasst.

14. Mobile elektronische Vorrichtung mit einem Sicherheitsverriegelungssystem zur Sicherung gegen unbefugtes Entfernen und Verwendung, wobei die mobile elektronische Vorrichtung (1) umfasst:
- einen Empfänger (10, 22) zum Empfangen von Standortinformationen;
- einen Speicher (13) mit gespeicherten geographischen Umgrenzungskoordinaten;
- einen Prozessor (15), welcher mit dem Empfänger verbunden ist, wobei der Prozessor (15) zu Berechnung eines aktuellen Standorts der mobilen elektronischen Vorrichtung (1) vorgesehen ist;
- wobei der Prozessor mit dem Speicher verbunden ist, wobei der Prozessor weiter bestimmt, ob der Standort der mobilen elektronischen Vorrichtung (1) sich innerhalb der geographischen Umgrenzung befindet;
**dadurch gekennzeichnet, dass** der Prozessor (15) weiter angepasst ist
- zu bestimmen, ob ein Sicherheitsverriegelungsereignis stattgefunden hat, vor der Berechnung des aktuellen Standorts der elektronischen Vorrichtung,
- das Sicherheitsverriegelungssystems auf ein Empfangen einer Eingabe von dem Benutzer hin zu aktivieren, vor einer Erzeugung des Sicherheitsverriegelungsereignisses; und
- eine Alarmfunktion zu aktivieren, falls bestimmt wird, dass der aktuelle Standort der elektronischen Vorrichtung sich nicht innerhalb der geographischen Umgrenzung befindet.

15. Mobile elektronische Vorrichtung nach Anspruch 14, wobei der Prozessor (15) weiter die geographischen Umgrenzungskoordinaten berechnet und die geographischen Umgrenzungskoordinaten in dem Speicher speichert, wenn das Sicherheitsverriegelungssystem aktiviert wird.

16. Mobile elektronische Vorrichtung nach Anspruch 14, wobei
- das Sicherheitsverriegelungsereignis ein Anschaltereignis umfasst; und
- der Prozessor (15) das Anschaltereignis auf ein Anschalten der mobilen elektronischen Vorrichtung (1) durch den Benutzer hin erzeugt.

17. Mobile elektronische Vorrichtung nach Anspruch 14, wobei
- das Sicherheitsverriegelungsereignis ein Bewegungsereignis umfasst; und
- der Prozessor (15) weiter mit einem Bewegungssensor (24) gekoppelt ist, um das Bewegungsereignis auf ein Erfassen einer Bewegung der mobilen elektronischen Vorrichtung hin zu erzeugen.

18. Mobile elektronische Vorrichtung nach Anspruch 14, wobei
- das Sicherheitsverriegelungsereignis einen Funktionstasten-Betätigungs-Ereignis umfasst; und
- der Prozessor (15) weiter mit einer oder mehreren Funktionstasten (14) gekoppelt ist, zum Erzeugen des Funktionstasten-Betätigungs-Ereignisses auf eine Betätigung von zumindest einer der mehreren Funktionstasten durch den Benutzer hin.

19. Mobile elektronische Vorrichtung nach Anspruch 14, wobei der Prozessor (15) den Benutzer auffordert, vor dem Schritt des Aktivierens der Alarmfunktion innerhalb einer vorgegeben Zeit ein gültiges Passwort einzugeben.

20. Mobile elektronische Vorrichtung nach Anspruch 19, wobei der Prozessor (15) bestimmt, ob ein gültiges Passwort innerhalb der vorgegeben Zeit eingegeben wurde und die Alarmfunktion desaktiviert, falls festgestellt wird, dass das gültige Passwort innerhalb einer vorgegeben Zeit eingegeben wurde.

21. Mobile elektronische Vorrichtung nach Anspruch 14, wobei die Alarmfunktion umfasst, dass der Prozessor (15) laute Töne mit einem Tonerzeuger (17) erzeugt.

22. Mobile elektronische Vorrichtung nach Anspruch 14, wobei die Alarmfunktion umfasst, dass der Prozessor (15) eine LED (40) aufleuchten lässt.

23. Mobile elektronische Vorrichtung nach Anspruch 14, wobei die Alarmfunktion umfasst, dass der Prozessor (15) laute Pieptöne unter Verwendung eines Lautsprechers (19) erzeugt.

24. Mobile elektronische Vorrichtung nach Anspruch 14, wobei der Empfänger (10) die Standortinformation von einem oder mehreren GPS-Satelliten empfängt.

25. Mobile elektronische Vorrichtung nach Anspruch 14, wobei der Empfänger (10) die Standortinformation von einer oder mehreren Basisstationen empfängt.

## Revendications

1. Procédé pour protéger un dispositif électronique mobile ayant un système de verrouillage de sécurité, contre une suppression non autorisée et une utilisation en dehors d'une frontière pré-calculée, le procédé comportant les étapes consistant à :
activer le système de verrouillage de sécurité après la réception d'une entrée d'un utilisateur ;
détecter un événement de verrouillage de sécurité ;
calculer une localisation en cours du dispositif électronique mobile ;
déterminer si le dispositif électronique mobile se situe au sein de la frontière géographique ; et
activer une fonction d'alarme s'il est déterminé que ladite localisation en cours du dispositif électronique mobile ne se situe pas dans la frontière géographique.

2. Procédé selon la revendication 1, dans lequel l'étape consistant à activer le système de verrouillage de sécurité comporte en outre les étapes consistant à calculer ladite frontière géographique ; et à stocker ladite frontière géographique dans la mémoire dudit dispositif électronique mobile.

3. Procédé selon la revendication 1 ou 2, comportant les étapes consistant à inviter l'utilisateur à saisir un mot de passe valide en un temps prédéterminé avant l'étape d'activation de ladite fonction d'alarme.

4. Procédé selon la revendication 1, dans lequel ledit événement de verrouillage de sécurité comporte un événement de mise sous tension, où ledit événement de mise sous tension est généré lors de la mise sous tension du dispositif électronique mobile.

5. Procédé selon la revendication 1, dans lequel ledit événement de verrouillage de sécurité comporte un événement de déplacement, où ledit événement de déplacement est généré lors de la détection d'un déplacement du dispositif électronique mobile.

6. Procédé selon la revendication 1, dans lequel ledit événement de verrouillage de sécurité comporte un événement d'activation de touche fonctionnelle, où ledit événement d'activation de touche fonctionnelle est généré lors de l'activation d'une ou plusieurs touches fonctionnelles du dispositif électronique mobile.

7. Procédé selon la revendication 1, comportant en outre l'étape consistant à inviter l'utilisateur à saisir un mot de passe valide en un temps prédéterminé avant l'étape d'activation de ladite fonction d'alarme.

8. Procédé selon la revendication 7, comportant en outre l'étape consistant à désactiver ladite fonction d'alarme si un mot de passe valide est fourni dans le temps prédéterminé.

9. Procédé selon la revendication 1, dans lequel ladite fonction d'alarme comporte l'étape consistant à générer des bips forts au moyen d'un haut-parleur.

10. Procédé selon la revendication 1, dans lequel ladite fonction d'alarme comporte l'étape consistant à générer des tonalités fortes au moyen d'un générateur audio.

11. Procédé selon la revendication 1, dans lequel ladite fonction d'alarme comporte l'étape consistant à faire clignoter une diode électroluminescente (DEL).

12. Procédé selon la revendication 1, dans lequel l'étape consistant à calculer la localisation en cours comporte l'étape consistant à recevoir des informations de localisation d'un ou plusieurs satellites GPS.

13. Procédé selon la revendication 1, dans lequel l'étape consistant à calculer la localisation en cours comporte l'étape consistant à recevoir des informations de localisation d'une ou plusieurs stations de base.

14. Dispositif électronique mobile présentant un système de verrouillage de sécurité en vue de protéger contre une utilisation et une suppression non autorisée, le dispositif électronique mobile (1) comportant :
un récepteur (10, 22) en vue de recevoir des informations de localisation;
une mémoire (13) présentant des coordonnées de frontières géographiques stockées ;
un processeur (15) couplé audit récepteur, ledit processeur (15) étant destiné à calculer une localisation en cours du dispositif électronique mobile (1) ;
ledit processeur étant couplé à ladite mémoire, ledit processeur déterminant en outre si ladite localisation en cours du dispositif électronique mobile (1) se situe dans ladite frontière géographique ;
**caractérisé en ce que** :
ledit processeur (15) est en outre adapté en vue de
- déterminer si un événement de verrouillage de sécurité a été rencontré, avant l'étape de calcul de ladite localisation en cours du dispositif électronique ;
- activer le système de verrouillage de sécurité après la réception d'une entrée d'un utilisateur, avant une génération dudit événement de verrouillage de sécurité, et
- activer une fonction d'alarme s'il est déterminé que ladite localisation en cours du dispositif électronique ne se situe pas dans ladite frontière géographique.

15. Dispositif électronique mobile selon la revendication 14, dans lequel ledit processeur (15) calcule en outre lesdites coordonnées de frontières géographiques et stocke lesdites coordonnées de frontières géographiques dans ladite mémoire lors de l'activation du système de verrouillage de sécurité.

16. Dispositif électronique mobile selon la revendication 14, dans lequel ledit événement de verrouillage de sécurité comporte un événement de mise sous tension ; et ledit processeur (15) génère ledit événement de mise sous tension lors de la mise sous tension du dispositif électronique mobile (1) par l'utilisateur.

17. Dispositif électronique mobile (1) selon la revendication 14, dans lequel ledit événement de verrouillage de sécurité comporte un événement de déplacement ; et ledit processeur (15) est en outre couplé à un détecteur de mouvement (24) en vue de générer ledit événement de déplacement lors de la détection d'un déplacement du dispositif électronique mobile.

18. Dispositif électronique mobile selon la revendication 14, dans lequel ledit événement de verrouillage de sécurité comporte un événement d'activation de touche fonctionnelle ; et ledit processeur (15) est en outre couplé à une ou plusieurs touches fonctionnelles (14) en vue de générer ledit événement d'activation de touche fonctionnelle lors de l'activation par l'utilisateur d'au moins une de ladite pluralité de touches fonctionnelles.

19. Dispositif électronique mobile selon la revendication 14, dans lequel ledit processeur (15) invite l'utilisateur à saisir un mot de passe valide en un temps prédéterminé, avant l'activation de ladite fonction d'alarme.

20. Dispositif électronique mobile selon la revendication 19, dans lequel ledit processeur (15) détermine si un mot de passe valide a été saisi dans ledit temps prédéterminé et désactive la fonction d'alarme s'il a été déterminé qu'un mot de passe valide a été saisi dans le temps prédéterminé.

21. Dispositif électronique mobile selon la revendication 14, dans lequel ladite fonction d'alarme comporte l'étape dans laquelle le processeur (15) génère des tonalités fortes au moyen d'un générateur audio (17).

22. Dispositif électronique mobile selon la revendication 14, dans lequel ladite fonction d'alarme comporte l'étape dans laquelle le processeur (15) fait clignoter une diode électroluminescente (DEL) (40).

23. Dispositif électronique mobile selon la revendication 14, dans lequel ladite fonction d'alarme comporte l'étape dans laquelle le processeur (15) génère des bips forts au moyen d'un haut-parleur (19).

24. Dispositif électronique mobile selon la revendication 14, dans lequel ledit récepteur (10) reçoit lesdites informations de localisation d'un ou plusieurs satellites GPS.

25. Dispositif électronique mobile selon la revendication 14, dans lequel ledit récepteur (10) reçoit des informations de localisation d'une ou plusieurs stations de base.
